Europäisches Patentamt

European Patent Office

Office européen des brevets

(19)

(11) **EP 1 256 554 B1**

(12) **FASCICULE DE BREVET EUROPEEN**

(45) Date de publication et mention
de la délivrance du brevet:
**01.03.2006 Bulletin 2006/09**

(51) Int Cl.:
*C03B 37/018* (2006.01)     *C03B 37/012* (2006.01)
*G02B 6/02* (2006.01)

(21) Numéro de dépôt: **02291076.4**

(22) Date de dépôt: **29.04.2002**

(54) **Fibre optique à saut d'indice à gaine et coeur dopés, préforme et procédé de fabrication pour une telle fibre**

Optische Stufenindexfaser mit dotiertem Kern und Mantel, Vorform und Herstellungsverfahren fÜr eine solche Faser

Step index optical fibre with doped core and cladding, preform and manufacturing process for such a fibre

(84) Etats contractants désignés:
**AT BE CH CY DE DK ES FI FR GB GR IE IT LI LU MC NL PT SE TR**

(30) Priorité: **11.05.2001 FR 0106247**

(43) Date de publication de la demande:
**13.11.2002 Bulletin 2002/46**

(73) Titulaire: **Draka Comteq B.V.**
**1018 TX Amsterdam (NL)**

(72) Inventeurs:
 • **Fleury, Ludovic**
   **78390 Bois d'Arcy (FR)**
 • **De Montmorillon, Louis-Anne**
   **75017 Paris (FR)**
 • **Beaumont, Florent**
   **78700 Conflans Ste Honorine (FR)**
 • **Sillard, Pierre**
   **78150 Le Chesnay (FR)**
 • **Gorlier, Maxime**
   **75017 Paris (FR)**
 • **Nouchi, Pascale**
   **78600 Maison-Lafitte (FR)**
 • **Campion, Jean-Florent**
   **78700 Conflans St Honorine (FR)**
 • **Labatut, Christine**
   **78700 Conflans Ste Honorine (FR)**

(74) Mandataire: **Blokland, Arie**
**Algemeen Octrooi- en Merkenbureau,**
**P.O. Box 645**
**5600 AP Eindhoven (NL)**

(56) Documents cités:
**EP-A- 1 000 909          GB-A- 2 351 287**

 • **PATENT ABSTRACTS OF JAPAN vol. 13, no. 15, 13 janvier 1989 (1989-01-13) & JP 63 222031 A (SUMITOMO ELECTRIC IND LTD), 14 septembre 1988 (1988-09-14)**
 • **PATENT ABSTRACTS OF JAPAN vol. 12, no. 391, 18 octobre 1988 (1988-10-18) & JP 63 139028 A (SUMITOMO ELECTRIC IND LTD), 10 juin 1988 (1988-06-10)**
 • **PATENT ABSTRACTS OF JAPAN vol. 12, no. 172, 21 mai 1988 (1988-05-21) & JP 62 278141 A (SEIKO EPSON CORP), 3 décembre 1987 (1987-12-03)**
 • **PATENT ABSTRACTS OF JAPAN vol. 11, no. 75, 6 mars 1987 (1987-03-06) & JP 61 232229 A (SUMITOMO ELECTRIC IND LTD), 16 octobre 1986 (1986-10-16)**
 • **PATENT ABSTRACTS OF JAPAN vol. 12, no. 410, 28 octobre 1988 (1988-10-28) & JP 63 147840 A (FUJIKURA LTD), 20 juin 1988 (1988-06-20)**

EP 1 256 554 B1

**Description**

La présente invention concerne le domaine des transmissions par fibre optique, et plus spécifiquement, les fibres optiques à saut d'indice de réfraction, indiqué comme "indice " dans le reste de la description, utilisées comme fibre de ligne dans de tels systèmes de transmissions.

Pour des fibres optiques, on qualifie généralement le profil d'indice en fonction de l'allure du graphe de la fonction qui associe au rayon de la fibre l'indice de réfraction. On représente de façon classique sur les abscisses la distance r au centre de la fibre, et sur les ordonnées la différence entre l'indice de réfraction et l'indice de réfraction de la gaine de la fibre. On parle ainsi de profil d'indice en "échelon", en "trapèze" ou en "triangle" pour des graphes qui présentent des formes respectives d'échelon, de trapèze ou de triangle. Ces courbes sont généralement représentatives du profil théorique ou de consigne de la fibre, les contraintes de fabrication de la fibre pouvant conduire à un profil sensiblement différent.

On utilise classiquement comme fibre de ligne pour les systèmes de transmissions à fibres optiques des fibres à saut d'indice, appelée aussi fibres SMF (acronyme de l'anglais "Single Mode Fiber"). La demanderesse commercialise ainsi sous référence ASMF 200 une fibre monomode à saut d'indice présentant une longueur d'onde $\lambda_0$ d'annulation de la dispersion chromatique entre 1300 et 1320 nm, et une dispersion chromatique inférieure ou égale à 3,5 ps/(nm.km) dans une plage de 1285-1330 nm, et de 17 ps/(nm.km) à 1550 nm. La pente de dispersion chromatique à 1550 nm est de l'ordre de 0,06 ps/(nm$^2$.km).

WO-A-00 36443 décrit une fibre optique à saut d'indice, présentant un coeur d'indice supérieur à celui de la gaine. Celle-ci est entourée d'une couche de carbone. Le coeur présente un diamètre entre 9,5 et 12,0 $\mu$m. La différence relative d'indice entre le coeur et la gaine est comprise entre 0,3 et 0,5%. Il est indiqué dans ce document que la fibre peut être fabriquée à partir de silice, en dopant le coeur au germanium, avec une gaine de silice ; une alternative est de doper la gaine au fluor, en utilisant un coeur de silice.

Ces deux solutions présentent des inconvénients. D'une part, le dopage du coeur au germanium nécessite de fortes concentrations de germanium - typiquement supérieures à 5 % en poids - pour permettre d'atteindre la différence d'indice requise par rapport à une gaine en silice. De telles concentrations de germanium augmentent l'atténuation dans la fibre. D'autre part, la fabrication d'une fibre à coeur de silice et à gaine dopée, comme suggérée dans ce document, implique d'utiliser pour la fabrication une technique de dépôt axial en phase vapeur (VAD ou "Vapour Axial Deposition" en langue anglaise), ou une technique d'oxydation externe en phase vapeur (OVPO ou "Outside Vapour Phase Oxydation" en langue anglaise). WO-A-00 42458 décrit une fibre de transmission pour des systèmes de transmission longue distance; la gaine est dopée au fluor et le coeur est dopé au chlore. La fibre est fabriquée suivant une technique VAD.

Pour la fabrication de fibres optiques, on utilise aussi la technique appelée MCVD - dépôt chimique modifié en phase vapeur. On dépose successivement à l'intérieur d'un tube de dépôt des couches de silice contenant des dopants permettant de faire varier l'indice. Le tube est ensuite rétreint ou contracté pour constituer une première préforme. Cette première préforme est introduite dans un ou plusieurs manchons, qui sont rétreints ou contractés pour être appliqués contre la première préforme. La préforme ainsi obtenue est étirée pour former la fibre. Ces techniques de fabrication sont bien connues de l'homme du métier.

Ainsi, EP-A-0 972 752 décrit une fabrication par MCVD et propose de déposer à l'intérieur d'un tube de dépôt des couches successives de matériau de gaine et de matériau de coeur. Après contraction, le tube de dépôt est introduit dans un ou plusieurs manchons ; il est proposé que le manchon intérieur présente un dopage abaissant l'indice pour constituer une fibre à gaine enterrée. La gaine déposée à l'intérieur du tube de dépôt peut être dopée au fluor, le coeur étant dopé au germanium. Si la pureté du tube de dépôt est suffisante, il est possible d'éviter le dépôt de la gaine. Le tube de dépôt est un tube en verre avec une concentration d'ions OH$^-$ inférieure à 0,05 ppm en masse. US-A-4 566 754 ou US-A-5 692 087 proposent aussi une fibre à saut d'indice fabriquée par MCVD, en déposant dans un tube de dépôt en silice une gaine dopée au fluor et un coeur dopé au germanium.

US-A-5 942 296 suggère, pour le même type de préforme, de faciliter l'étirage de la préforme en agissant sur la viscosité et la conductivité thermique du tube de dépôt en silice et du ou des manchons qui l'entourent. Cette solution permet d'éviter de chauffer le coeur de la préforme. Il est précisé dans ce document que le coût de fabrication par MCVD décroît lorsque l'épaisseur de la gaine dopée au fluor diminue.

EP-A-0 899 243 propose encore une fibre à saut d'indice présentant un coeur dopé au germanium, une gaine intérieure dopée au fluor et une gaine extérieure en silice non-dopée. Cette demande propose d'étirer la fibre à une vitesse supérieure à 20 g/min.

EP-A-0 863 108 décrit un procédé de fabrication de préforme par dépôt au plasma d'une recharge à l'extérieur d'un tube de dépôt.

Le problème de l'invention est la fabrication par MCVD de fibres à saut d'indice. Par rapport à la solution proposée dans ces documents - tube de dépôt en silice, gaine dopée au fluor et coeur dopé au germanium - elle permet de simplifier le processus de fabrication de la préforme et d'en diminuer la durée et le coût. Elle permet aussi d'obtenir une fibre à saut d'indice ayant une surface effective plus importante et une atténuation plus faible.

Plus précisément, l'invention propose un procédé de fabrication d'une préforme pour l'étirage d'une fibre optique, comprenant :

- la formation par dépôt chimique en phase vapeur à l'intérieur d'un tube de dépôt présentant un indice inférieur à l'indice de la silice d'une gaine intérieure présentant un indice sensiblement égal à l'indice du tube de dépôt, la différence relative entre l'indice de la gaine intérieure et l'indice du tube de dépôt étant en valeur absolue inférieure à 0,02 %,
- la formation par dépôt chimique en phase vapeur à l'intérieur de la gaine d'un coeur présentant un indice supérieur à l'indice de la silice.

Dans un mode de réalisation, la différence entre l'indice du tube de dépôt et l'indice de la silice est inférieure à -0,5.10$^{-3}$.

Dans un autre mode de réalisation, la différence entre l'indice du coeur et l'indice de la gaine intérieure est comprise entre 4,3.10$^{-3}$ et 5.10$^{-3}$.

Le procédé peut encore comprendre

- le rétreint du tube de dépôt avec la gaine intérieure et le coeur ; et
- le dépôt d'une recharge déposée par plasma autour du tube rétreint, la recharge présentant un indice sensiblement égal à l'indice du tube de dépôt.

Il est aussi possible de prévoir

- le rétreint du tube de dépôt avec la gaine intérieure et le coeur ; et
- le rétreint d'un manchon autour du tube rétreint, le manchon présentant un indice sensiblement égal à l'indice du tube de dépôt.

L'invention propose encore une préforme pour l'étirage d'une fibre optique, comprenant :

- un tube de dépôt présentant un indice inférieur à l'indice de la silice ;
- une gaine intérieure au tube de dépôt présentant un indice sensiblement égal à l'indice du tube de dépôt, la différence relative entre l'indice de la gaine intérieure et l'indice du tube de dépôt étant en valeur absolue inférieure à 0,02 % ;
- un coeur intérieur à la gaine présentant un indice supérieur à l'indice de la silice.

Il est avantageux que la différence entre l'indice du tube de dépôt et l'indice de la silice soit inférieure à -0,5.10$^{-3}$. La différence entre l'indice du coeur et l'indice de la gaine intérieure est avantageusement comprise entre 4,3.10$^{-3}$ et 5.10$^{-3}$.

Autour du tube de dépôt, on peut prévoir une recharge présentant un indice sensiblement égal à l'indice du tube de dépôt, ou encore un manchon présentant un indice sensiblement égal à l'indice du tube de dépôt.

L'invention propose aussi un procédé de fabrication d'une fibre optique, comprenant l'étirage d'une telle préforme. Elle propose enfin une fibre optique présentant:

- une gaine d'indice inférieur à l'indice de la silice ;
- une gaine intérieure s'étendant à l'intérieur de cette gaine et présentant un indice sensiblement égal à l'indice de la gaine; et
- un coeur s'étendant à l'intérieur de la gaine intérieure et présentant un indice supérieur à l'indice de la silice.

Dans un mode de réalisation, la fibre présente

- une différence $\Delta n$ entre l'indice du coeur et l'indice de la gaine intérieure comprise entre 4,3.10$^{-3}$ et 5.10$^{-3}$;
- un rayon de coeur $r_1$ compris entre 4,8 $\mu$m et 5,7 $\mu$m, et
- un produit $r_1 . \sqrt{\Delta n}$ du rayon de coeur par la racine de la dite différence compris entre 0,336 $\mu$m et 0,378 $\mu$m.

La fibre optique peut présenter une gaine dont la différence d'indice par rapport à l'indice de la silice est inférieure à -0,5.10$^{-3}$ et une différence d'indice relative entre l'indice de la gaine intérieure et l'indice de la gaine inférieure à 0,02 % en valeur absolue.

La gaine intérieure est caractérisée par des variations d'indice quasi-périodiques comprises entre 0,3.10$^{-3}$ et 0,5.10$^{-3}$ en valeur absolue, présentant une symétrie autour de l'axe de la fibre avec une périodicité de l'ordre de 0,6 à 1,4 $\mu$m. Cette gaine intérieure peut être dopée à partir de $C_2F_6$, et dans ce cas, la vitesse de variation de l'indice donnée par le rapport entre l'écart crête à crête de l'indice et la demi-période des variations est comprise entre $0,4.10^{-3}$ $\mu m^{-1}$ et $1,7.10^{-3}$ $\mu m^{-1}$. La gaine intérieure peut aussi être dopée à partir de $SiF_4$, et dans ce cas, la période est inchangée et le rapport entre l'écart absolu crête à crête de l'indice et la demi-période des variations est compris entre $0,2.10^{-3}$ $\mu m^{-1}$ et $0,7.10^{-3}$ $\mu m^{-1}$.

Il est encore avantageux que la vitesse de variation d'indice dans la gaine soit inférieure à $0,1.10^{-3}$ $\mu m^{-1}$.

La fibre peut aussi présenter une surface effective supérieure ou égale à 90 $\mu m^2$ à la longueur d'onde de 1.55 $\mu m$, ou une longueur d'onde de coupure théorique inférieure ou égale à 1,65 $\mu m$.

Du point de vue du profil, la fibre optique peut être caractérisée par l'une ou plusieurs des relations suivantes :

- le rapport entre le rayon $r_2$ (en $\mu m$) du tube de dépôt et le rayon $r_1$ (en $\mu m$) du coeur est supérieur ou égal à $-7,33.r_1.\sqrt{\Delta n} + 4,36$, avec $r_1.\sqrt{\Delta n}$ le produit du rayon de coeur par la racine de la différence entre l'indice du coeur et l'indice de la gaine intérieure ;
- le rapport entre le rayon $r_2$ du tube de dépôt et le rayon $r_1$ du coeur est inférieur ou égal à $-10,71.r_1.\sqrt{\Delta n} + 6,7$ avec $r_1.\sqrt{\Delta n}$ le produit du rayon de coeur par la racine de la différence entre l'indice du coeur et l'indice de la gaine intérieure.

Il est encore avantageux que la puissance se propageant dans la partie de la fibre correspondant au tube de dépôt soit comprise entre 0,025 et 1,4 %. D'autres caractéristiques et avantages de l'invention apparaîtront à la lecture de la description qui suit de modes de réalisation de l'invention, donnés à titre d'exemple et en référence au dessin annexé, dont la figure unique montre une représentation schématique du profil d'indice d'une fibre selon l'invention.

L'invention propose, pour la fabrication par MCVD d'une fibre optique à saut d'indice, d'utiliser un tube de dépôt avec un dopant abaissant l'indice ; dans ce tube est déposée une gaine intérieure dopée présentant sensiblement l'indice du tube de dépôt, puis un coeur dopé présentant un indice supérieur à l'indice de la gaine et du tube de dépôt. Après rétreint, il est encore avantageux de prévoir une recharge qui est aussi dopée pour abaisser l'indice jusqu'à un indice voisin de l'indice du tube de dépôt.

La fibre obtenue par étirage d'une préforme réalisée suivant ce procédé présente un coeur, une gaine intérieure qui correspond à la gaine intérieure dopée déposée à l'intérieur du tube de dépôt et une gaine qui correspond au tube de dépôt ; il est possible sur la fibre ainsi obtenue de distinguer la gaine, la gaine intérieure et le coeur de fibre. De fait, la gaine provient du tube de dépôt, et présente un indice qui est sensiblement constant ; à tout le moins, la gaine n'a aucune raison de présenter des variations sensiblement périodiques de l'indice suivant une symétrie de révolution autour de l'axe de la fibre. De même, la recharge ou le manchon dont l'indice n'excède pas l'indice de la gaine de plus de $0,5.10^{-3}$, ne présente pas non plus de variations sensiblement périodiques de l'indice. En revanche, la gaine intérieure résulte du dépôt par CVD à l'intérieur du tube de dépôt. Dans la mesure où un tel dépôt s'effectue en plusieurs passes, la gaine intérieure présente en fait une pluralité d'interfaces ou d'ondulations d'indice de faible amplitude. Il est donc possible de déterminer sur une fibre optique s'il existe une gaine et une gaine intérieure.

Le niveau de pertes par courbure est une caractéristique importante à considérer lors de la réalisation d'une fibre optique. Dans une fibre à saut d'indice, les pertes par courbure dépendent de l'indice de la gaine et du rapport $r_2/r_1$ qui désigne le rapport du rayon $r_2$ de début de la gaine en partant de l'axe de la fibre au rayon du coeur $r_1$. Pour un indice de gaine donné, les pertes par courbure augmentent lorsque le rapport $r_2/r_1$ diminue. De même, pour un rapport $r_2/r_1$ donné, les pertes par courbure augmentent avec l'indice de gaine. Afin de garder un niveau de pertes par courbure faible - un niveau inférieur à $10^{-5}$ dB/m à un rayon de 30 mm - le rayon $r_2$ doit rester supérieur à une valeur minimale $r_{2m}$ qui est d'autant plus élevé que l'indice de la gaine est élevé. En supposant que l'indice de la gaine reste supérieur ou égal à l'indice de la gaine intérieure, la valeur de $r_{2m}$ est minimale lorsque l'indice de la gaine est égal à l'indice de la gaine intérieure. C'est notamment le cas des fibres de l'invention où l'indice du tube de dépôt et de la recharge est sensiblement égal à l'indice de la gaine intérieure. En revanche, ce n'est pas le cas des fibres à coeur de silice (Pure Silica Core Fiber, PSCF) réalisées avec les techniques OVD ou AVD où l'indice de la gaine en silice est égale à l'indice du coeur. Les fibres PSCF sont donc caractérisées par de fortes valeurs du rayon $r_2$ défini plus haut et nécessitent par conséquent une section élevée de dépôt de gaine intérieure pour maintenir un faible niveau de pertes par courbure. Par rapport aux fibres PSCF, la solution de l'invention a l'avantage de présenter un indice de gaine et de recharge sensiblement égal à l'indice de la gaine intérieure et permet donc de limiter considérablement l'épaisseur de la gaine intérieure en réduisant comparativement le coût de fabrication. Dans le cas des fibres de l'invention, le rôle de la gaine intérieure est principalement de réduire la contribution du tube de dépôt à l'atténuation spectrale, cette contribution étant proportionnelle à la puissance du champ optique se propageant dans le tube et à l'absorbance du tube à la longueur d'onde de fonctionnement.

L'invention présente un autre avantage concernant l'atténuation spectrale. La faible proportion de dopant Germanium présent dans les couches déposées du coeur limite la diffusion Rayleigh par le coeur de fibre et par conséquent limite l'atténuation spectrale. En désignant $\Delta n_c$ la différence entre l'indice $n_c$ du coeur et l'indice $n_g$ de la gaine, on peut poser :

$$\Delta n_c = n_c - n_g = (n_c - n_{si}) + (n_{si} - n_g) \quad (1) \qquad (n_g < n_{si})$$

où $n_{si}$ désigne l'indice de la silice.

La quantité de Germanium à déposer dans le coeur d'une fibre de l'invention est proportionnelle à $(n_c - n_{si})$ et non pas à $(n_c - n_g)$ d'où l'intérêt d'utiliser une gaine dopée au Fluor d'indice inférieur à celui de la silice.

On donne maintenant un exemple de réalisation d'une préforme et d'une fibre selon l'invention, suivant une technique de dépôt chimique modifié en phase vapeur. On utilise un tube de dépôt dopé pour présenter un indice inférieur à celui de la silice : le dopage peut être un dopage au fluor, dans une proportion comprise entre 2500 et 3500 ppm en masse, qui a pour effet d'abaisser l'indice du tube à des valeurs inférieures à $-0,5.10^{-3}$ par rapport à l'indice de la silice. Le tube de dépôt présente typiquement un diamètre intérieur de 34 mm, un diamètre extérieur de 39 mm, et une longueur de 1300 à 1690 mm. On peut utiliser le tube de dépôt commercialisé sous la référence F320 HERAEUS.

On forme à l'intérieur du tube de dépôt une gaine intérieure, qui est dopée pour en abaisser l'indice par rapport à l'indice de la silice. La gaine intérieure présente un indice voisin de l'indice du tube de dépôt. Il est avantageux que la gaine intérieure présente un indice égal à celui du tube du dépôt ; l'écart d'indice de la gaine intérieure par rapport à l'indice du tube de dépôt est acceptable s'il reste compris entre $-0,3.10^{-3}$ et 0. En termes relatifs, il est avantageux que la différence relative entre l'indice de la gaine intérieure et l'indice du tube de dépôt soit inférieure à 0,02 % en valeur absolue. De tels écarts n'ont en effet qu'une incidence limitée sur les propriétés de transmission de la fibre optique obtenue ensuite. On peut notamment utiliser un dopage au fluor pour abaisser l'indice de la gaine, dans une proportion de 0,3 à 1 % en poids de Fluor. Pour former cette gaine intérieure, on utilise les techniques connues de dépôt chimique en phase vapeur.

On forme ensuite à l'intérieur du tube de dépôt un coeur qui est dopé pour en augmenter l'indice par rapport à l'indice de la silice. Avantageusement, la différence entre l'indice du coeur et l'indice de la gaine intérieure est comprise entre $4,3.10^{-3}$ et $5.10^{-3}$. A titre d'exemple, ces valeurs correspondent à des différences d'indice comprises entre $3,3.10^{-3}$ et $4.10^{-3}$ par rapport à l'indice de la silice lorsque la différence d'indice entre la gaine intérieure et l'indice de la silice vaut $-1.10^{-3}$.

Après avoir déposé dans le tube de dépôt la gaine intérieure et le coeur, la préforme est rétreinte de sorte à fermer l'ouverture de passage des gaz dans le tube de dépôt. Après rétreint, on peut disposer autour du tube de dépôt un manchon ou une recharge, de façon connue en soi : un manchon est rétreint autour de la préforme, tandis qu'une recharge peut être déposée par CVD ou par dépôt au plasma ; le manchon présente un indice sensiblement constant, sans ondulations; une recharge peut aussi présenter des ondulations, qui dépendent le cas échéant du processus de fabrication, par exemple des variations du dopant. Il est avantageux que l'indice du manchon ou de la recharge soit aussi voisin de l'indice du tube de dépôt. Le manchon ou la recharge peuvent à cet effet être dopés, par exemple au fluor. Comme dans le cas de la gaine intérieure, une différence inférieure à $0,3.10^{-3}$ entre l'indice du manchon ou de la recharge et l'indice du tube de dépôt est acceptable.

Les dimensions de la préforme peuvent être les suivantes :

- diamètre extérieur du coeur : de 3,5 à 4 mm ;
- diamètre intérieur du tube de dépôt : de 8 à 10 mm ;
- diamètre extérieur du tube de dépôt : de 18 à 22 mm ;
- diamètre final préforme rechargée ou manchonnée : de 39 à 45 mm.

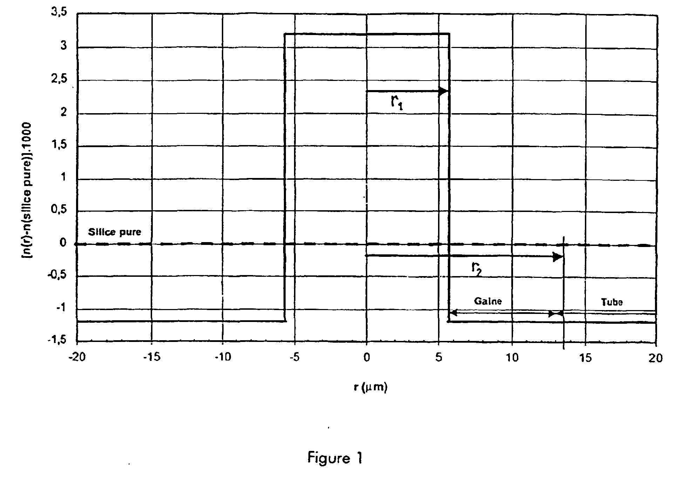

L'étirage d'une telle préforme, par un procédé d'étirage ou de fibrage connu en soi, permet d'obtenir une fibre présentant le profil d'indice de consigne représenté à la figure 1. Sur les abscisses est portée la distance r au centre de la fibre, et sur les ordonnées la différence entre l'indice de réfraction et l'indice de réfraction de la gaine de la fibre. Le profil de la figure 1 est un profil à saut d'indice. On reconnaît autour de l'axe de la fibre le coeur de fibre qui présente un indice supérieur à celui de la silice ; le rayon $r_1$ du coeur est compris entre 4,8 et 5,7 $\mu$m.

Autour du coeur, la fibre présente un indice sensiblement constant et inférieur à celui de la silice. Entre les rayons $r_1$ et $r_2$ s'étend la partie de la fibre qui correspond à la gaine intérieure ; $r_2$ est typiquement compris entre 12,5 et 15,7 $\mu$m. Cette partie de la fibre est appelée dans la suite "gaine intérieure" ; comme expliqué plus haut, elle se distingue de la partie de la fibre qui correspond au tube de dépôt, par la présence d'ondulations d'indice. Ces ondulations sont des variations quasi-périodiques de la valeur de l'indice le long du rayon du profil d'indice, i. e. sur un rayon de la fibre ; la période dépend de l'épaisseur des couches déposées dans le tube de dépôt, et des variations de dimensions lors du rétreint de la préforme puis lors du fibrage. Ces variations quasi-périodiques peuvent dépendre des dopants utilisés. On peut utiliser comme dopant du $C_2F_6$, pour des indices de gaine intérieure abaissés jusqu'à $-1,5.10^{-3}$ par rapport à l'indice de la silice ; on utilise couramment du $SiF_4$ pour atteindre des valeurs d'indice inférieures à $-1,5.10^{-3}$ par rapport à l'indice de la silice. La taille relative crête à crête des ondulations d'indice peut varier selon le dopant utilisé.

Des valeurs typiques des variations pour du $C_2F_6$ utilisé comme dopant se situent entre 0,3 et $0,5.10^{-3}$; compte tenu de la quasi-période des ondulations, le rapport entre cette variation crête à crête et la demi-période est compris entre $0,4.10^{-3}$ $\mu m^{-1}$ et $1,7.10^{-3}$ $\mu m^{-1}$. Des valeurs typiques des variations pour du $SiF_4$ utilisé comme dopant sont plus faibles, et se situent typiquement autour de $0,2.10^{-3}$, ce qui conduit à un rapport des variations crête à crête à la demi-période compris entre $0,2.10^{-3}$ et $0,7.10^{-3}$ $\mu m^{-1}$. On peut encore utiliser comme dopants dans la gaine intérieure du Germanium à raison de 0,3 à 1% en poids et/ou du Phosphore à raison de 0,3 à 0,4 % en poids. Le germanium permet si nécessaire de limiter l'atténuation spectrale, tandis que le phosphore assure une meilleure vitrification du dépôt.

Au-delà du rayon $r_2$ s'étend la partie de la fibre qui correspond au tube de dépôt et à la recharge. La partie correspondant au tube de dépôt est qualifiée dans la suite de "gaine". Les variations d'indice de la gaine sont liées à l'homogénéité d'indice du tube dépôt. Dans la gaine, l'indice varie généralement lentement et ces variations restent généralement inférieures à $0,1.10^{-3}$. En revanche, contrairement à la gaine intérieure, ces variations ne sont pas périodiques . La vitesse de variation - mesurée radialement sur une distance de 1 $\mu m$ - est inférieure à $0,1.10^{-3}$ $\mu m^{-1}$, autrement dit est plus faible que les variations radiales d'indice dans la gaine intérieure.

La différence d'indice entre le coeur de fibre et la gaine intérieure - le saut d'indice de la fibre - est typiquement comprise entre $4,3.10^{-3}$ et $5.10^{-3}$.

La fibre de l'invention présente les caractéristiques de propagation suivantes, mesurées à 1550 nm :

- dispersion chromatique : de 18,7 à 20,3 ps/(nm.km) ;
- pente de dispersion chromatique : de 0,058 à 0,061 ps/(nm$^2$.km) ;
- longueur d'onde de coupure théorique : inférieure ou égale à 1650 nm ;
- pertes par courbure à 10 mm : inférieures ou égales à 15 dB/m ;
- aire effective : supérieure ou égale à 90 $\mu m^2$ ;
- diamètre de mode : supérieur ou égal à 10,7 $\mu m$ ;
- atténuation : inférieure ou égale à 0,22 dB/km.

Les pertes par courbure sont mesurées par enroulement de la fibre autour d'un manchon de 10 mm de diamètre.

A titre d'exemple, une fibre d'un rayon de coeur de 5,7 $\mu m$, présentant une gaine intérieure d'un rayon extérieur de 13,68 $\mu m$, avec un indice à $1,2.10^{-3}$ en dessous de l'indice de la silice et un saut d'indice de $4,4.10^{-3}$ entre la gaine intérieure et le coeur a les caractéristiques de propagation suivantes à 1550 nm :

- dispersion chromatique : 19,6 ps/(nm.km) ;
- pente de dispersion chromatique : 0,06 ps/(nm$^2$.km) ;
- longueur d'onde de coupure théorique : 1645 nm ;
- pertes par courbure : 12,3 dB/m ;
- aire effective : 113 $\mu m^2$ ;
- diamètre de mode : 11,8 $\mu m$ ;
- atténuation : 0,18 dB/km.

L'invention permet d'obtenir par MCVD une fibre à saut d'indice, présentant une forte aire effective et une faible atténuation ; les valeurs de l'atténuation obtenues résultent notamment de la concentration en dopant dans le coeur de fibre, qui est plus faible que dans les fibres de l'état de la technique. Le procédé de l'invention assure une fabrication à coût réduit, du fait de l'épaisseur réduite de la gaine intérieure à déposer dans le tube de dépôt.

La fibre de l'invention peut être utilisée dans tous les usages connus des fibres à saut d'indice, et notamment comme fibre de ligne dans des systèmes de transmission à fibre optique. Elle présente généralement les caractéristiques de propagation qui suivent. Pour un indice de tube dopé au fluor inférieur ou égal à - $0,5.10^{-3}$, et pour des valeurs de l'indice du coeur par rapport à l'indice du tube entre $4.10^{-3}$ et $5.10^{-3}$, les valeurs de saut d'indice par rapport à l'indice de la silice restent inférieures à $4,5.10^{-3}$. Comme expliqué plus haut, cette valeur est inférieure à la valeur obtenue pour une fibre à saut d'indice classique à gaine de silice ; cette baisse de l'indice de coeur par rapport à l'indice de la silice dans la fibre proposée contribue à la réduction de la diffusion Rayleigh dans la fibre.

Les profils obtenus lorsque l'on vérifie les conditions du paragraphe précédent satisfont notamment les inégalités suivantes :

$4,3.10^{-3} \leq \Delta n \leq 5.10^{-3}$, avec $\Delta n$ la différence entre l'indice du coeur et l'indice de la gaine intérieure ;

$4,8$ $\mu m \leq r_1 \leq 5,7$ $\mu m$, avec $r_1$ le rayon de coeur de la fibre ;

$$0,336 \ \mu m \leq r_1.\sqrt{\Delta n} \leq 0,378 \ \mu m.$$

Cette dernière relation est une solution possible pour que les profils aient une surface effective supérieure ou égale à 90 $\mu$m$^2$ et inférieure ou égale à 115$\mu$m$^2$ et une longueur d'onde de coupure théorique en dessous de 1,65 $\mu$m.

On peut aussi déterminer les positions extrêmes du tube de dépôt, en fonction du rayon et de l'indice du coeur ; à cette fin, on peut utiliser les relations suivantes :

$$(r_2/r_1)_{min} = -7{,}33.r_1. \sqrt{\Delta n} + 4{,}36$$

et

$$(r_2/r_1)_{max} = -10{,}71.r_1. \sqrt{\Delta n} + 6{,}7$$

Lorsque ces lois sont satisfaites, la puissance du mode se propageant dans le tube de dépôt est comprise entre 0,025 et 1,4% de la puissance totale se propageant dans la fibre et l'incrément d'atténuation par absorption du tube de dépôt reste inférieur à 0,01 dB/km environ.

Dans la description qui précède, ne sont pas décrits les détails de mise en oeuvre du dépôt chimique modifié en phase vapeur, qui sont bien connues de l'homme du métier. L'invention est décrite dans l'exemple du MCVD. Elle pourrait aussi être mise en oeuvre par PCVD (dépôt chimique en phase vapeur assisté plasma), ou par toute autre technique de dépôt à l'intérieur d'un tube de dépôt.

**Revendications**

1. Un procédé de fabrication d'une préforme pour l'étirage d'une fibre optique, comprenant :

   - la formation par dépôt chimique en phase vapeur à l'intérieur d'un tube de dépôt présentant un indice de réfraction inférieur à l'indice de réfraction de la silice d'une gaine intérieure présentant un indice de réfraction sensiblement égal à l'indice de réfraction du tube de dépôt, la différence relative entre l'indice de réfraction de la gaine intérieure et l'indice de réfraction du tube de dépôt étant en valeur absolue inférieure à 0,02 %,
   - la formation par dépôt chimique en phase vapeur à l'intérieur de la gaine d'un coeur présentant un indice de réfraction supérieur à l'indice de réfraction de la silice.

2. Le procédé de la revendication 1, **caractérisé en ce que** la différence entre l'indice de réfraction du tube de dépôt et l'indice de réfraction de la silice est inférieure à -0,5.10$^{-3}$.

3. Le procédé de la revendication 1 ou 2, **caractérisé en ce que** la différence entre l'indice de réfraction du coeur et l'indice de réfraction de la gaine intérieure est comprise entre 4,3.10$^{-3}$ et 5.10$^{-3}$.

4. Le procédé d'une des revendications 1 à 3, comprenant en outre

   - le rétreint du tube de dépôt avec la gaine intérieure et le coeur ; et
   - le dépôt d'une recharge autour du tube rétreint, la recharge présentant un indice de réfraction sensiblement égal à l'indice de réfraction du tube de dépôt.

5. Le procédé d'une des revendications 1 à 3, comprenant en outre

   - le rétreint du tube de dépôt avec la gaine intérieure et le coeur ; et
   - le rétreint d'un manchon autour du tube rétreint, le manchon présentant un indice de réfraction sensiblement égal à l'indice de réfraction du tube de dépôt.

6. Une préforme pour l'étirage d'une fibre optique, comprenant :

   - un tube de dépôt présentant un indice de réfraction inférieur à l'indice de réfraction de la silice ;
   - une gaine intérieure au tube de dépôt présentant un indice de réfraction sensiblement égal à l'indice de réfraction du tube de dépôt, la différence relative entre l'indice de réfraction de la gaine intérieure et l'indice de réfraction du tube de dépôt étant en valeur absolue inférieure à 0,02 % ;
- un coeur intérieur à la gaine présentant un indice de réfraction supérieur à l'indice de réfraction de la silice.

7. La préforme de la revendication 6, **caractérisée en ce que** la différence entre l'indice de réfraction du tube de dépôt et l'indice de réfraction de la silice est inférieure à -0,5.$10^{-3}$.

8. La préforme de la revendication 6 ou 7, **caractérisée en ce que** la différence entre l'indice de réfraction du coeur et l'indice de réfraction de la gaine intérieure est comprise entre 4,3.$10^{-3}$ et 5.$10^{-3}$.

9. La préforme de l'une des revendications 6 à 8, **caractérisée par** une recharge autour du tube de dépôt, la recharge présentant un indice de réfraction sensiblement égal à l'indice de réfraction du tube de dépôt.

10. La préforme de l'une des revendications 6 à 8, **caractérisée par** un manchon autour du tube de dépôt, le manchon présentant un indice de réfraction sensiblement égal à l'indice de réfraction du tube de dépôt.

11. Un procédé de fabrication d'une fibre optique, comprenant l'étirage d'une préforme selon l'une des revendications 6 à 10.

12. Une fibre optique présentant:

   - une gaine d'indice de réfraction inférieur à l'indice de réfraction de la silice ;
   - une gaine intérieure s'étendant à l'intérieur de cette gaine et présentant un indice de réfraction sensiblement égal à l'indice de réfraction de la gaine, la différence d'indice de réfraction relative entre l'indice de réfraction de la gaine intérieure et l'indice de réfraction de la gaine étant inférieure à 0,02 % en valeur absolue ;
   - un coeur s'étendant à l'intérieur de la gaine intérieure et présentant un indice de réfraction supérieur à l'indice de réfraction de la silice.

13. La fibre optique de la revendication 12, **caractérisée en ce qu'**elle présente

   - une différence $\Delta n$ entre l'indice de réfraction du coeur et l'indice de réfraction de la gaine intérieure comprise entre 4,3.$10^{-3}$ et 5.$10^{-3}$;
   - un rayon de coeur $r_1$ compris entre 4,8 $\mu$m et 5,7 $\mu$m, et
   - un produit $r_1.\sqrt{\Delta n}$ du rayon de coeur par la racine de la dite différence entre 0,336 $\mu$m et 0,378 $\mu$m.

14. La fibre optique de la revendication 12 ou 13, **caractérisée en ce qu'**elle présente une gaine dont la différence d'indice de réfraction par rapport à l'indice de réfraction de la silice est inférieure à -0,5.$10^{-3}$

15. La fibre optique de la revendication 12 ou 14, **caractérisée en ce que** la gaine intérieure présente des variations d'indice de réfraction quasi-périodiques, présentant une symétrie autour de l'axe de la fibre.

16. La fibre optique de la revendication 15, **caractérisée en ce que** la gaine intérieure est dopée à partir de $C_2F_6$, et **en ce que** le rapport entre l'écart absolu crête à crête de l'indice de réfraction et la demi-période des variations est compris entre 0,4.$10^{-3}\mu$m$^{-1}$ et 1,7.$10^{-3}\mu$m$^{-1}$.

17. La fibre optique de la revendication 15, **caractérisée en ce que** la gaine intérieure est dopée à partir de $SiF_4$, et **en ce que** le rapport entre l'écart crête à crête de l'indice de réfraction et la demi-période des variations est compris entre 0,2.$10^{-3}$ $\mu$m$^{-1}$ et 0,7.$10^{-3}\mu$m$^{-1}$.

18. La fibre optique de l'une des revendications 12 à 17, **caractérisée en ce que** la vitesse de variations d'indice de réfraction dans la gaine mesurée radialement sur une distance de 1 $\mu$m est inférieure à 0,1.$10^{-3}$.

19. La fibre optique de l'une des revendications 12 à 18, **caractérisée en ce qu'**elle présente une surface effective supérieure ou égale à 90 $\mu$m$^2$ à la longueur d'onde de 1.55 $\mu$m.

20. La fibre optique de l'une des revendications 12 à 19, **caractérisée en ce qu'**elle présente une longueur d'onde de coupure théorique inférieure ou égale à 1,65 $\mu$m.

21. La fibre optique de l'une des revendications 12 à 20, **caractérisée en ce que** le rapport entre le rayon $r_2$ du tube

de dépôt et le rayon $r_1$ du coeur est supérieur ou égal à

$$-7{,}33.r_1.\ \sqrt{\Delta n} + 4{,}36$$

avec $r_1.\sqrt{\Delta n}$ le produit du rayon de coeur par la racine de la différence entre l'indice de réfraction du coeur et l'indice de réfraction de la gaine intérieure.

22. La fibre optique de l'une des revendications 12 à 21, **caractérisée en ce que** le rapport entre le rayon $r_2$ du tube de dépôt et le rayon $r_1$ du coeur est inférieur ou égal à

$$-10{,}71.r_1.\ \sqrt{\Delta n} + 6{,}7$$

avec $r_1.\sqrt{\Delta n}$ le produit du rayon de coeur par la racine de la différence entre l'indice de réfraction du coeur et l'indice de réfraction de la gaine intérieure.

23. La fibre optique de l'une des revendications 12 à 22, **caractérisée en ce que** la puissance de mode se propageant dans la partie de la fibre correspondant au tube de dépôt est comprise entre 0,025 et 1,4 %.


**Patentansprüche**

1. Verfahren zur Herstellung einer Vorform zum Ziehen einer optischen Faser, das umfasst:

  - die Bildung eines inneren Mantels durch chemischen Niederschlag in der Dampfphase im Inneren eines Niederschlagsrohres, das einen Brechungsindex aufweist, der kleiner ist als der Brechungsindex von Quarz, wobei der innere Mantel einen Brechungsindex im Wesentlichen gleich dem Brechungsindex des Niederschlagsrohres aufweist, wobei die relative Differenz zwischen dem Brechungsindex des inneren Mantels und dem Brechungsindex des Niederschlagsrohres im Absolutwert kleiner als 0,02 % ist,
  - die Bildung eines Kerns, der einen Brechungsindex aufweist, der größer ist als der Brechungsindex von Quarz, durch chemischen Niederschlag in der Dampfphase im Inneren des Mantels.

2. Verfahren nach Anspruch 1, **dadurch gekennzeichnet, dass** die Differenz zwischen dem Brechungsindex des Niederschlagsrohres und dem Brechungsindex von Quarz kleiner als

  $- 0{,}5.10^{-3}$ ist.

3. Verfahren nach Anspruch 1 oder 2, **dadurch gekennzeichnet, dass** die Differenz zwischen dem Brechungsindex des Kerns und dem Brechungsindex des inneren Mantels zwischen $4{,}3.10^{-3}$ und $5.10^{-3}$ beträgt.

4. Verfahren nach einem der Ansprüche 1 bis 3, das außerdem umfasst:

  - die Querschnittsverminderung des Niederschlagsrohres mit dem inneren Mantel und dem Kern; und
  - den Niederschlag einer Nachfüllung um das querschnittsverminderte Rohr, wobei die Nachfüllung einen Brechungsindex aufweist, der im Wesentlichen gleich dem Brechungsindex des Niederschlagsrohres ist.

5. Verfahren nach einem der Ansprüche 1 bis 3, das außerdem umfasst:

  - die Querschnittsverminderung des Niederschlagsrohres mit dem inneren Mantel und dem Kern;
  - die Querschnittsverminderung einer Hülse um das querschnittsverminderte Rohr, wobei die Hülse einen Brechungsindex aufweist, der im Wesentlichen gleich dem Brechungsindex des Niederschlagsrohres ist.

6. Vorform zum Ziehen einer optischen Faser, die aufweist:

  - ein Niederschlagsrohr mit einem Brechungsindex, der kleiner ist als der Brechungsindex von Quarz;

- einen Inneren Mantel im Niederschlagsrohr, der einen Brechungsindex aufweist, der im Wesentlichen gleich dem Brechungsindex des Niederschlagsrohres ist, wobei die relative Differenz zwischen dem Brechungsindex des inneren Mantels und dem Brechungsindex des Niederschlagsrohres im Absolutwert kleiner als 0,02 % ist;
- einen Kern im Inneren des Mantels, der einen Brechungsindex aufweist der größer ist als der Brechungsindex von Quarz.

**7.** Vorform nach Anspruch 6, **dadurch gekennzeichnet, dass** die Differenz zwischen dem Brechungsindex des Niederschlagsrohres und dem Brechungsindex von Quarz kleiner als $-0{,}5.10^{-3}$ ist.

**8.** Vorform nach Anspruch 6 oder 7, **dadurch gekennzeichnet, dass** die Differenz zwischen dem Brechungsindex des Kerns und dem Brechungsindex des inneren Mantels zwischen $4{,}3.10^{-3}$ und $5.10^{-3}$ beträgt.

**9.** Vorform nach einem der Ansprüche 6 bis 8, **gekennzeichnet durch** eine Nachfüllung um das Niederschlagsrohr, wobei die Nachfüllung einen Brechungsindex aufweist, der im Wesentlichen gleich dem Brechungsindex des Niederschlagsrohres ist.

**10.** Vorform nach einem der Ansprüche 6 bis 8, **gekennzeichnet durch** eine Hülse um das Niederschlagsrohr, wobei die Hülse einen Brechungsindex aufweist, der im Wesentlichen gleich dem Brechungsindex des Niederschlagsrohres ist.

**11.** Verfahren zur Herstellung einer optischen Faser, das das Ziehen einer Vorform nach einem der Ansprüche 6 bls 10 umfasst.

**12.** Optische Faser, die aufweist:

- einen Mantel mit einem Brechungsindex, der kleiner ist als der Brechungsindex von Quarz;
- einen inneren Mantel, der sich im Inneren dieses Mantels erstreckt und einen Brechungsindex aufweist, der im Wesentlichen gleich dem Brechungsindex des Mantels ist, wobei die relative Brechungsindexdifferenz zwischen dem Brechungsindex des Inneren Mantels und dem Brechungsindex des Mantels im Absolutwert kleiner ist als 0,02 %.
- einen Kern, der sich im Inneren des inneren Mantels erstreckt und einen Brechungsindex aufweist, der größer ist als der Brechungsindex von Quarz.

**13.** Optische Faser nach Anspruch 12, **dadurch gekennzeichnet, dass** sie aufweist:

- eine Differenz $\Delta n$ zwischen dem Brechungsindex des Kerns und dem Brechungsindex des inneren Mantels zwischen $4{,}3.10^{-3}$ und $5.10^{-3}$;
- einen Kernradius $r_1$ zwischen $4{,}8\ \mu m$ und $5{,}7\ \mu m$, und
- ein Produkt $r_1.\sqrt{\Delta n}$ des Kernradius mit der Wurzel der Differenz zwischen $0{,}336\ \mu m$ und $0{,}378\ \mu m$.

**14.** Optische Faser nach Anspruch 12 oder 13, **dadurch gekennzeichnet, dass** sie einen Mantel aufweist, dessen Brechungsindexdifferenz bezüglich des Brechungsindexes von Quarz kleiner als $-0{,}5.10^{-3}$ ist.

**15.** Optische Faser nach Anspruch 12 oder 14, **dadurch gekennzeichnet, dass** der innere Mantel quasi-periodische Schwankungen des Brechungsindexes aufweist, die eine Symmetrie um die Faserachse zeigen.

**16.** Optische Faser nach Anspruch 15, **dadurch gekennzeichnet, dass** der innere Mantel von $C_2F_6$ dotiert ist, und dass das Verhältnis zwischen absolutem Abstand von Maximum zu Maximum des Brechungsindexes und der halben Periodenlänge der Schwankungen zwischen $0{,}4.10^{-3}\ \mu m^{-1}$ und $1{,}7.10^{-3}\ \mu m^{-1}$ beträgt.

**17.** Optische Faser nach Anspruch 15, **dadurch gekennzeichnet, dass** die innere Hülle von $SiF_4$ dotiert ist, und dass das Verhältnis zwischen dem Abstand von Maximum zu Maximum des Brechungsindexes und der halben Periodenlänge der Schwankungen zwischen $0{,}2.10^{-3}\ \mu m^{-1}$ und $0{,}7.10^{-3}\ \mu m^{-1}$ beträgt.

**18.** Optische Faser nach einem der Ansprüche 12 bis 17, **dadurch gekennzeichnet, dass** die Geschwindigkeit von Schwankungen des Brechungsindexes im Mantel, radial gemessen auf einem Abstand von $1\ \mu m$ kleiner als $0{,}1.10^{-3}$ ist.

**19.** Optische Faser nach einem der Ansprüche 12 bis 18, **dadurch gekennzeichnet, dass** sie eine effektive Oberfläche aufweist, die größer oder gleich 90 $\mu$m$^2$ bei einer Wellenlänge von 1,55 $\mu$m ist.

**20.** Optische Faser nach einem der Ansprüche 12 bis 19. **dadurch gekennzeichnet, dass** sie eine theoretische Grenzwellenlänge aufweist, die kleiner oder gleich 1,65 $\mu$m ist.

**21.** Optische Faser nach einem der Ansprüche 12 bis 20, **dadurch gekennzeichnet, dass** das Verhältnis zwischen dem Radius $r_2$ des Niederschlagsrohres und dem Radius $r_1$ des Kerns größer oder gleich

$$-7,33 \cdot r_1 \cdot \sqrt{\Delta n} + 4,36$$

ist,
mit $r_1 \cdot \sqrt{\Delta n}$ als Produkt des Kernradius mit der Wurzel der Differenz zwischen dem Brechungsindex des Kerns und dem Brechungsindex des inneren Mantels.

**22.** Optische Faser nach einem der Ansprüche 12 bis 21, **dadurch gekennzeichnet, dass** das Verhältnis zwischen dem Radius $r_2$ des Niederschlagsrohres und dem Radius $r_1$ des Kerns größer oder gleich

$$-10,71 \cdot r_1 \cdot \sqrt{\Delta n} + 6,7$$

ist,
mit $r_1 \cdot \sqrt{\Delta n}$ als Produkt des Kernradius mit der Wurzel der Differenz zwischen dem Brechungsindex des Kerns und dem Brechungsindex des inneren Mantels.

**23.** Optische Faser nach einem der Ansprüche 12 bis 22, **dadurch gekennzeichnet, dass** die Modenleistung, die sich in dem Teil der Faser ausbreitet, der dem Niederschlagsrohr entspricht, zwischen 0,025 und 1,4 % liegt.

**Claims**

**1.** A method of producing a preform for drawing out an optical fibre, comprising:

- formation, by chemical vapour deposition inside a deposition tube which has a refractive index less than the refractive index of silica, of an inner cladding which has a refractive index substantially equal to the refractive index of the deposition tube, the relative difference between the refractive index of the inner cladding and the refractive index of the deposition tube being, in absolute terms, less than 0.02 %,
- formation, by chemical vapour deposition inside the cladding, of a core which has a refractive index greater than the refractive index of silica.

**2.** The method of claim 1, **characterised in that** the difference between the refractive index of the deposition tube and the refractive index of silica is less than -0.5 x 10$^{-3}$.

**3.** The method of claim 1 or 2, **characterised in that** the difference between the refractive index of the core and the refractive index of the inner cladding is between 4.3 x 10$^{-3}$ and 5 x 10$^{-3}$ inclusive.

**4.** The method of one of claims 1 to 3, additionally comprising

- shrinkage of the deposition tube with the inner cladding and core; and
- deposition of a further layer around the shrunk tube, the further layer having a refractive index substantially equal to the refractive index of the deposition tube.

**5.** The method of one of claims 1 to 3, additionally comprising

- shrinkage of the deposition tube with the inner cladding and core; and
- shrinkage of a sleeve around the shrunk tube, the sleeve having a refractive index substantially equal to the refractive index of the deposition tube.

6. A preform for drawing out an optical fibre, comprising:

   - a deposition tube which has a refractive index less than the refractive index of silica;
   - an inner cladding - inside the deposition tube - which has a refractive index substantially equal to the refractive index of the deposition tube, the relative difference between the refractive index of the inner cladding and the refractive index of the deposition tube being, in absolute terms, less than 0.02 %,
   - a core - inside the cladding - which has a refractive index greater than the refractive index of silica.

7. The preform of claim 6, **characterised in that** the difference between the refractive index of the deposition tube and the refractive index of silica is less than $-0.5 \times 10^{-3}$.

8. The preform of claim 6 or 7, **characterised in that** the difference between the refractive index of the core and the refractive index of the inner cladding is between $4.3 \times 10^{-3}$ and $5 \times 10^{-3}$ inclusive.

9. The preform of one of claims 6 to 8, **characterised by** a further layer around the deposition tube, the further layer having a refractive index substantially equal to the refractive index of the deposition tube.

10. The preform of one of claims 6 to 8, **characterised by** a sleeve around the deposition tube, the sleeve having a refractive index substantially equal to the refractive index of the deposition tube.

11. A method of producing an optical fibre, comprising drawing out a preform according to one of claims 6 to 10.

12. An optical fibre having:

    - a cladding which has a refractive index less than the refractive index of silica;
    - an inner cladding extending inside that cladding and having a refractive index substantially equal to the refractive index of the cladding, the relative difference in refractive index between the refractive index of the inner cladding and the refractive index of the cladding being, in absolute terms, less than 0.02 %,
    - a core extending inside the inner cladding and having a refractive index greater than the refractive index of silica.

13. The optical fibre of claim 12, **characterised in that** it has

    - a difference $\Delta n$ between the refractive index of the core and the refractive index of the inner cladding which is between $4.3 \times 10^{-3}$ and $5 \times 10^{-3}$ inclusive;
    - a core radius $r_1$ of between 4.8 and 5.7 $\mu m$ inclusive, and
    - a product $r_1 \times \sqrt{\Delta n}$ of the core radius and the square root of said difference of between 0.336 $\mu m$ and 0.378 $\mu m$.

14. The optical fibre of claim 12 or 13, **characterised in that** it has a cladding whose refractive index differs from the refractive index of silica by less than $-0.5 \times 10^{-3}$.

15. The optical fibre of claim 12 or 14, **characterised in that** the inner cladding has quasi-periodic variations in refractive index having symmetry about the axis of the fibre.

16. The optical fibre of claim 15, **characterised in that** the inner cladding is doped with $C_2F_6$, and **in that** the ratio between the absolute peak-to-peak difference in the refractive index and the half-period of the variations is between $0.4 \times 10^{-3}$ $\mu m^{-1}$ and $1.7 \times 10^{-3}$ $\mu m^{-1}$ inclusive.

17. The optical fibre of claim 15, **characterised in that** the inner cladding is doped with $SiF_4$, and **in that** the ratio between the peak-to-peak difference in the refractive index and the half-period of the variations is between $0.2 \times 10^{-3}$ $\mu m^{-1}$ and $0.7 \times 10^{-3}$ $\mu m^{-1}$ inclusive.

18. The optical fibre of one of claims 12 to 17, **characterised in that** the rate of variations in the refractive index in the cladding, measured radially over a distance of 1 $\mu m$, is less than $0.1 \times 10^{-3}$.

19. The optical fibre of one of claims 12 to 18, **characterised in that** it has an effective area greater than or equal to 90 $\mu m^2$ at a wavelength of 1.55 $\mu m$.

20. The optical fibre of one of claims 12 to 19, **characterised in that** it has a theoretical cut-off wavelength of less than or equal to 1.65 $\mu$m.

21. The optical fibre of one of claims 12 to 20, **characterised in that** the ratio between the radius $r_2$ of the deposition tube and the radius $r_1$ of the core is greater than or equal to

$$-7.33 \times r_1 \times \sqrt{\Delta n} + 4.36$$

wherein $r_1 \times \sqrt{\Delta n}$ is the product of the radius of the core and the square root of the difference between the refractive index of the core and the refractive index of the inner cladding.

22. The optical fibre of one of claims 12 to 21, **characterised in that** the ratio between the radius $r_2$ of the deposition tube and the radius $r_1$ of the core is less than or equal to

$$-10.71 \times r_1 \times \sqrt{\Delta n} + 6.7$$

wherein $r_1 \times \sqrt{\Delta n}$ is the product of the radius of the core and the square root of the difference between the refractive index of the core and the refractive index of the inner cladding.

23. The optical fibre of one of claims 12 to 22, **characterised in that** the mode power propagating **in that** part of the fibre which corresponds to the deposition tube is between 0.025 and 1.4 % inclusive.

Figure 1